# EUROPÄISCHE PATENTSCHRIFT

(11) **EP 2 355 373 B1**
(45) Veröffentlichungstag und Bekanntmachung des Hinweises auf die Patenterteilung: **08.08.2018**
(21) Anmeldenummer: 11151694.4
(22) Anmeldetag: 21.01.2011
(51) Int. Cl.: H04B 7/155

(54) **Vorrichtung und Verfahren zur Frequenzumsetzung**
Device and method for frequency conversion
Dispositif et procédé de conversion de fréquence

(30) Priorität: 26.01.2010 DE 102010000193
(43) Veröffentlichungstag der Anmeldung: 10.08.2011
(73) Patentinhaber: Vodafone Holding GmbH, 40213 Düsseldorf (DE)
(72) Erfinder: Höhn, Volker, 47805 Krefeld (DE)
(74) Vertreter: Ring & Weisbrodt

(56) Entgegenhaltungen:
- EP-A2- 0 418 096
- EP-B1- 1 501 216
- WO-A1-2009/157861
- US-A1- 2006 019 604
- US-A1- 2009 207 761
- TEXAS INSTRUMENTS: "On the design of relay node for LTE-advanced", 3GPP DRAFT; R1-090290 L2 RELAY V9, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Nr. Ljubljana; 20090107, 7. Januar 2009 (2009-01-07), XP050318214, [gefunden am 2009-01-07]
- ERICSSON ET AL: "Text proposal to correct relaying text in TR36.814 and TR36.912", 3GPP DRAFT; R1-100801 TEXT PROPOSAL TO CORRECT RELAYING TEXT IN TR 36 814 AND TR 36 912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, Bd. RAN WG1, Nr. Valencia, Spain; 20100118, 21. Januar 2010 (2010-01-21), XP050418411, [gefunden am 2010-01-21]

## Beschreibung

### Technisches Gebiet

Die Erfindung betrifft eine Vorrichtung zur Frequenzumsetzung von Funksignalen zwischen einem Mobilfunkendgerät und einer Basisstation in einem Telekommunikations-Netz, wobei die Vorrichtung mindestens eine Sende- und eine Empfangseinrichtung zum Senden und/oder Empfangen von Funksignalen in verschiedenen Frequenzbändern umfasst. Ferner betrifft die Erfindung ein Verfahren zur Frequenzumsetzung von Funksignalen zwischen einem Mobilfunkendgerät, einem Frequenzumsetzer und einer Basisstation in einem Telekommunikations-Netz.

### Hintergrund der Erfindung

Aufgrund von Anforderungen der Regulierungsbehörden in unterschiedlichen Gebieten der Welt werden Telekommunikationsnetze in den Bereichen UMTS (UMTS: Universal Mobile Telecommunication System) und zukünftig LTE (Long Term Evolution) in verschiedenen Frequenzbändern betrieben.
Zur Verbesserung der flächendeckenden Funknetzversorgung werden Telekommunikationsnetze in anderen Frequenzbändern operieren, z.B. als UMTS 900 im 900 MHz Bereich oder als UMTS850 im 850MHz Bereich.

Aus EP 0418096 ist ein Telekommunikationsnetz bekannt, das in mehrere Zellen unterteilt ist. Jeder dieser Zellen ist ein Repeater zur Umsetzung von Funksignalen zwischen einem Mobilfunkendgerät und einer Basisstation in einem Telekommunikationsnetz zugeordnet, wobei dieser Repeater mindestens eine Sende- und eine Empfangseinrichtung zum Senden und/oder Empfangen von Funksignalen umfasst. Der Repeater soll die von einem Mobilfunkendgerät übertragenen Funksignale empfangen, umsetzen und verstärken sowie umgekehrt von der Basisstation eines Telekommunikationsnetzes an ein Endgerät übertragene Funksignale empfangen, umsetzen und bedämpfen.

Aus dem Dokument "On the design of relay node for LTE-advanced" der 3GPP sind ferner verschiedene mögliche Ausgestaltungen für Relaisstationen in LTE-Telekommunikationsnetzen bekannt, wobei grundsätzlich zwischen einem sogenannten Inband-Relay und einem sogenannten Outband-Relay unterschieden wird. Das Inband-Relay betrifft den Fall, dass zwischen einbem Mobilfunkendgerät und der Relaisstation das gleiche Frequenzband zur Übertragung genutzt wird wie zwischen der Relaisstation und einer Basisstation des LTE-Telekommunikationsnetzes.

Das Dokument "Text proposal to correct relaying text in TR36.814 and TR36.912" der 3GPP offenbart ferner sogenannte Relaisfunktionalitäten des LTE-Telekommunikationsnetzes. Um ein Outband-Relay zu realisieren, wird vorgeschlagen, den verwendeten Frequenzbereich der Funksignale zwischen einem Mobilfunkendgerät und einer Relaisstation von dem verwendeten Frequenzbereich zwischen der Relaisstation und einer Basisstation des LTE-Telekommunikationsnetzes zu separieren.

Die US 2009/0207761 A1 betrifft ein FDD-Inband-Backhauling-Verfahren zum Herstellen einer drahtlosen Übertragung von mindestens einer Zugangsbasisstation zu einer Master-Basisstation in einem digitalen zellularen Kommunikationssystem, wobei die Zugangsbasisstation mit mindestens einer Mobilstation und mit einer Relaisbasis verbunden ist, wobei die Relaisbasisstation mit der Master-Basisstation und die Master-Basisstation mit einem Kernnetzwerk verbunden ist.

Die EP 1 501 216 B1 betrifft ein Zwischenverstärkersystem für UMTS mit Spektralaustausch zwischen den UMTS-Frequenzbändern, in welchem für die Zwischenverstärker verschiedene Frequenzbänder verwendet werden, um mit der UMTS-Basisstation und mit UMTS-Fernendgeräten sowie zwischen den Zwischenverstärkern zu kommunizieren, wobei das Zwischenverstärkersystem Nahzwischenverstärker, die mit der Basisstation in einem UMTS-Band verbunden sind, und Fernzwischenverstärker, die mit den Nahzwischenverstärkern in einem anderen UMTS-Band verbunden sind, umfass. Dabei ist ein Mechanismus vorgesehen, um störende Endgeräte auf der Grundlage der Phasenverzerrung des zwischen den Nah- und den Fernzwischenverstärkern übertragenen Signals zurückzuweisen, um das Aufschalten von UMTS-Zellenendgeräten in die Kommunikation zwischen den Zwischenverstärkern zu verhindern.

Die EP 0 418 096 A2 offenbart ein zellulares Kommunikationssystem zur Verwendung in einem Gebiet, das aus einer Vielzahl von zellularen Regionen mit niederenergetischen entfernten Stationen besteht, die Funksignale mit einem ersten Leistungspegel senden. Dabei sind eine definierte Anzahl von Basisstationsmitteln vorgesehen, wobei jedes Basisstationsmittel einem anderen der zellularen Gebiete zugeordnet ist und in der Lage ist Funksignale zu empfangen, die bei einer Basisstationsempfangsfrequenz und bei einem zweiten Leistungspegel übertragen werden, der größer ist als der erste Leistungspegel innerhalb der zellularen Region, die der gegebenen Basisstationseinrichtung zugeordnet ist und ferner zum Übertragen von Funksignalen bei einer Basisstaitions-Sendefrequenz innerhalb der zellularen Region, die der gegebenen Basisstationseinrichtung zugeordnet ist, ausgebildet ist.

Nachteil dieses Stands der Technik ist, dass der Repeater Funksignale zwischen Mobilfunkendgerät und Basisstation nur im gleichen Frequenzband weiterleiten kann.

### Offenbarung der Erfindung

Aufgabe der Erfindung ist, es einem Mobilfunkgerät zu ermöglichen, in Telekommunikationsnetzen mit unterschiedlichen Frequenzbändern zu kommunizieren.

Diese Aufgabe wird durch die in den unabhängigen Patentansprüchen aufgeführten Merkmale gelöst. Der Schutzumfang ist durch die Ansprüche bestimmt.

Weitere Ausgestaltungen und vorteilhafte Ausbildungen der Erfindung sind in den Unteransprüchen angegeben.

In einer vorteilhaften Ausführungsform der Erfindung ist eine Erfassungseinheit zum Erfassen der Sende- und Empfangsleistung und/oder der Empfangssignalqualität des Funksignals vorhanden.

Die Erfassungseinheit kann beispielsweise folgende Wirkungen haben: Sie gewährleistet das beste Empfangssignal für ein Mobilfunkendgerät und unterstützt bei einem Handover eines Mobilfunkendgeräts in einem Telekommunikationsnetz die Übergabe der Kommunikation des Mobilfunkendgeräts an eine weitere erfindungsgemässe Vorrichtung und stellt somit die unterbrechungsfreie Kommunikation sicher.

In einer vorteilhaften Ausgestaltung der Erfindung sind in der Sende- und Empfangseinrichtung Mittel zum Empfang und/oder Senden der Funksignale nach verschiedenen UMTS-Übertragungsverfahren vorhanden.

Eine vorteilhafte Wirkung ist, dass die Vorrichtung, die als technisch eigenständige Einrichtung oder kolloziert an der Basisstation oder einer anderen Einrichtung des UMTS-Telekommunikationsnetzes in allen UMTS-Telekommunikationsnetzen erfindungsgemäß eingesetzt werden kann und die beispielsweise nach dem FDMA-Verfahren (FDMA = Frequency Division Multiple Access) und/oder CDMA-Verfahren (CDMA = Code Division Multiple Access) und/oder OFDMA-Verfahren (OFDMA = Orthogonal Frequency Division Multiple Access) und/oder FDD-Verfahren (FDD = Frequency Division Duplex) die Funksignale übertragen, damit das Mobilfunkendgerät kommunizieren kann.

Bevorzugt ist in einer Ausgestaltung der Erfindung die Umsetzungseinheit, die Mittel zur Umsetzung der Funksignale von einem UMTS-Kernfrequenzband (eng.: 3G core band) in ein vom UMTS-Kernfrequenzband unterschiedliches Frequenzband des Telekommunikations-Netzes aufweist.

Eine solche Umsetzungseinheit ermöglicht, dass die im UMTS-Kernfrequenzband gesendeten und empfangenen Funksignale zwischen dem Mobilfunkendgerät und der Basisstation so umgesetzt werden, dass das Mobilfunkendgerät in dem UMTS-Telekommunikationsnetz, das in dem vom UMTS-Kernfrequenzband unterschiedlichem Frequenzband betrieben wird, kommunizieren kann.

In einer möglichen Ausgestaltung der Erfindung ist das Telekommunikationsnetz ein Telekommunikationsnetz nach LTE-Standard.

Die erfindungsgemässe Vorrichtung, die als technisch eigenständige Einrichtung oder kolloziert an der Basisstation oder einer anderen Einrichtung des UMTS-Telekommunikationsnetzes eingesetzt werden kann, ermöglicht es damit, Mobilfunkendgeräten in Netzen dieses Standards eine effiziente Nutzung hochratiger Datendienste und eine Übertragung von Sprachdiensten und Videotelefonie über das Internetprotokoll Voice over IP (VoIP) im Vergleich zu Mobilfunkendgeräten in UMTS-Telekommunikationsnetzen zu ermöglichen.

In einer Ausführungsform der Erfindung weist in dem Telekommunikationsnetz nach LTE-Standard die Sende- und Empfangseinrichtung Mittel zum Empfangen und Senden der Funksignale zur Berücksichtigung einer Bandbreite in einem ersten oder zweiten Frequenzband auf.

Dies ermöglicht, dass die Sende- und Empfangseinrichtung die empfangenen und gesendeten Funksignale mit der richtigen Bandbreite, letztere durch die Netzplanung des Telekommunikationsnetzes dimensioniert, überträgt und damit eine störungsfreie Kommunikation des Endgeräts mit der Basisstation gewährleistet ist.

In einer Ausgestaltung der erfindungsgemässen Vorrichtung ist in dem Telekommunikationsnetz nach LTE-Standard in der Umsetzungseinheit Mittel zur Umsetzung der Funksignale zur Ermittlung der Bandbreite des Funksignals in dem ersten oder zweiten Frequenzband vorhanden.

Damit wird nun ermöglicht, dass die Umsetzungseinheit bei der Frequenzumsetzung der empfangenen und gesendeten Funksignale mit der erforderlichen Bandbreite nach LTE-Standard berücksichtigt und eine unterbrechungsfreie Kommunikation zwischen Mobilfunkendgerät und Basisstation garantiert ist.

In einer Ausgestaltung des erfindungsgemässen Verfahrens zur FrequenzUmsetzung von Funksignalen zwischen dem Mobilfunkendgerät, dem Frequenzumsetzer und der Basisstation in dem Telekommunikations-Netz wird das Verfahren durch die Verfahrensschritte Empfangen der Funksignale des Mobilfunkendgeräts in dem ersten Frequenzband in dem Frequenzumsetzer, Umsetzen der Funksignale des ersten Frequenzbands in Funksignale des zweiten Frequenzbands in dem Frequenzumsetzer und Senden der in das zweite Frequenzband umgesetzten Funksignale von dem Frequenzumsetzer an die Basisstation erweitert.

Damit wird eine störungsfreie Kommunikation im Uplink-Pfad des Mobilfunkendgeräts über die erfindungsgemäße Vorrichtung zur Basisstation ermöglicht.

In einer Ausgestaltung des erfindungsgemässen Verfahrens zur FrequenzUmsetzung von Funksignalen zwischen dem Mobilfunkendgerät, dem Frequenzumsetzer und der Basisstation in dem Telekommunikations-Netz umfasst das Verfahren die Verfahrensschritte Empfangen der Funksignale der Basisstation in dem ersten Frequenzband in dem Frequenzumsetzer, Umsetzen der Funksignale des ersten Frequenzbands in Funksignale des zweiten Frequenzbands in dem Frequenzumsetzer und Senden der in das zweite Frequenzband umgesetzten Funksignale von dem Frequenzumsetzer an das Mobilfunkendgerät.

Somit wird eine störungsfreie Kommunikation im Downlink-Pfad des Mobilfunkendgeräts von der Basisstation über die Vorrichtung ermöglicht.

Zur weiteren Ausgestaltung des erfindungsgemässen Verfahrens werden die empfangenen Funksignale von einem UMTS-Kernfrequenzband (eng.: 3G core band) in ein vom UMTS-Kernfrequenzband unterschiedliches Frequenzband des Telekommunikations-Netzes umgesetzt.

Ein solches Verfahren ermöglicht, dass die im UMTS-Kernfrequenzband gesendeten und empfangenen Funksignale zwischen dem Mobilfunkendgerät und der Basisstation so umgesetzt werden, dass das Mobilfunkendgerät in einem UMTS-Telekommunikationsnetz, das in einem vom UMTS-Kernfrequenzband unterschiedlichem Frequenzband betrieben wird, kommunizieren kann.

In einer vorteilhaften Ausgestaltung des Verfahrens wird die Bandbreite des empfangenen Funksignals in dem ersten und/oder zweiten Frequenzband in dem Telekommunikations-Netz nach LTE-Standard zum Berücksichtigen der ermittelten Bandbreite beim Umsetzen des Funksignals ermittelt.

Ein solches Verfahren ermöglicht, dass bei der Frequenzumsetzung der empfangenen und gesendeten Funksignale die richtige Bandbreite berücksichtigt wird und eine unterbrechungsfreie Kommunikation zwischen Mobilfunkendgerät und Basisstation garantiert wird.

Weiterhin bevorzugt wird in einer weiteren Ausgestaltung des erfindungsgemäßen Verfahrens das Senden und Empfangen der Funksignale des Mobilfunkendgeräts bei Beginn, Ende und während des Kommunizierens über die unterschiedlichen vorteilhaften Ausgestaltungen der erfindungsgemäßen Vorrichtung in dem Telekommunikations-Netz.

Damit wird erreicht, dass das Mobilfunkgerät von Anfang bis Ende des erfindungsgemässen Verfahrens eine unterbrechungsfreie Kommunikation zwischen Basisstation und Mobilfunkgerät durchführen kann.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

### Beschreibung der Zeichnungen

In den Zeichnungen zeigen:
Figur 1 einen schematischen Ausschnitt eines Telekommunikationsnetzes mit Basisstation, Mobilfunkendgerät und Vorrichtung zur Frequenzumsetzung;
Figur 2 einen schematischen Ausschnitt eines Telekommunikationsnetzes bei einem Handover mit Basisstationen, Mobilfunkgeräten und Vorrichtungen zur Frequenzumsetzung.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - ein bevorzugtes Ausführungsbeispiel der Erfindung dargestellt ist.

### Bevorzugtes Ausführungsbeispiel

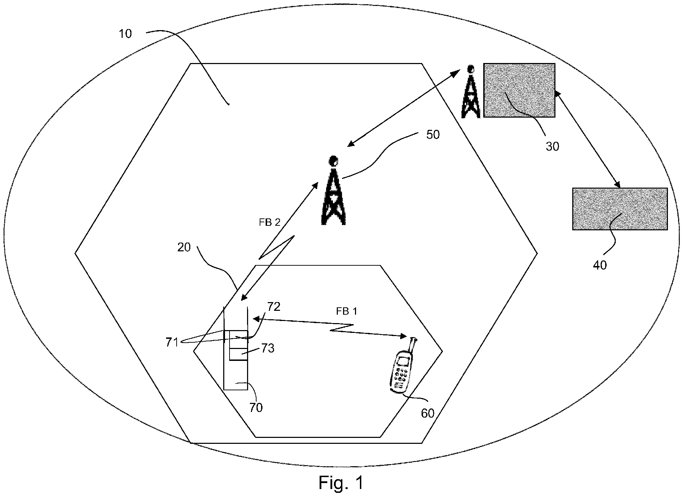

In Figur 1 wird mit 10 eine Funkzelle in einem schematischen Ausschnitt eines Telekommunikationsnetzes bezeichnet, die eine weitere Subzelle 20 enthält. Die Funkzelle 10 mit der Subzelle 20 sind Teil eines Telekommunikationsnetzes der 3. oder 4. Generation, beispielweise nach dem UMTS- oder LTE Standard. Das Telekommunikationsnetz weist darüber hinaus weitere Netzelemente zur Bearbeitung und Weiterleitung der Funksignale an andere Mobilfunkendgeräte oder andere Endgeräte auf, wie z. B. eine Basisstation-Steuereinrichtung (engl.: Base Station Controller (BSC)) in einem Telekommunikationsnetz nach GSM-Standard bzw. eine Funknetz-Steuereinrichtung 30 (engl.: Radio Network Controller (RNC)) in einem Telekommunikationsnetz nach UMTS-Standard und u. a. eine Funknetz-Vermittlungsstelle 40 (engl.: Mobile Switching Center (MSC)).

Die entsprechenden Netzelemente solcher Telekommunikationsnetze sind dem Fachmann bekannt und werden zur Vereinfachung stilisiert dargestellt.

Die Funkzelle 10 enthält eine Basisstation 50 zum Senden und Empfangen von Funksignalen.

Des Weiteren wird beispielhaft ein Mobilfunk-Endgerät 60 in Figur 1 dargestellt. Das Mobilfunkendgerät 60 kann z.B. ein Handy, Autotelefon, Smartphone oder mobiler Rechner (PDA, Notebook) oder eine anderes Gerät sein, das mit einem Telekommunikationsnetz kommunizieren kann.

Die Subzelle 20 enthält eine erfindungsgemässe Vorrichtung zur Frequenzumsetzung 70.

Die Vorrichtung zur Frequenzumsetzung 70 - im Folgenden kurz Frequenzumsetzer 70 genannt - besteht unter anderem aus einer Sende- und einer Empfangseinrichtung 71, einer Umsetzungseinheit 72 und einer Erfassungseinheit 73.

Der Frequenzumsetzer 70 ist in diesem bevorzugten Ausführungsbeispiel als technisch eigenständige Einrichtung dargestellt, kann aber auch koloziert an der Basisstation 50 oder einer anderen Einrichtung des Telekommunikationsnetzes eingesetzt werden.

Die Sende- und Empfangseinrichtung 71 besteht aus jeweils einer Sende- und einer oder auch zwei Empfangsantenne(n), wobei auch z. B. 3-in-1 Antennensysteme, die Sende- und Empfangsantenne(n) baulich in einer Antenne integrieren.

Die Erfassungseinheit 73 enthält typischerweise für UMTS-Telekommunikationsnetze einen sogenannten Rake-Empfänger. Dieser Rake-Empfänger reduziert den nachteiligen Effekt von Mehrfachpfadausbreitung der empfangenen Funksignale, indem er die Funksignalenergie von allen empfangenen Mehrfachpfadkomponenten kombiniert.

Ein Rake-Empfänger umfasst eine Mehrzahl sogenannter Rake-Finger, wobei im Idealfall jeweils ein Rake-Finger einem Übertragungspfad und damit einer Empfangssignal-Version zugeordnet ist. In jedem Rake-Finger wird das empfangene Signal mit dem Spreizcode entspreizt. Die entspreizten Signale der einzelnen Rake-Finger werden anschließend in einem sogenannten Maximum-Ratio-Combiner (MRC) im Symboltakt entsprechend der Dämpfung des Übertragungspfades gewichtet und überlagert.

Insbesondere ist mit diesem Frequenzumsetzer 70 in einer Subzelle 20 eine Nutzung des Mobilfunkendgeräts 60 in dem Telekommunikationsnetz möglich. Dazu kommuniziert das Mobilfunkendgerät 60 über den Frequenzumsetzer 70 mit der Basisstation 50 weiter über die Funknetz-Steuereinrichtung 30 und über die Funknetz-Vermittlungsstelle 40 dieses Telekommunikationsnetzes mit dem Endgerät des anderen Teilnehmers 80.

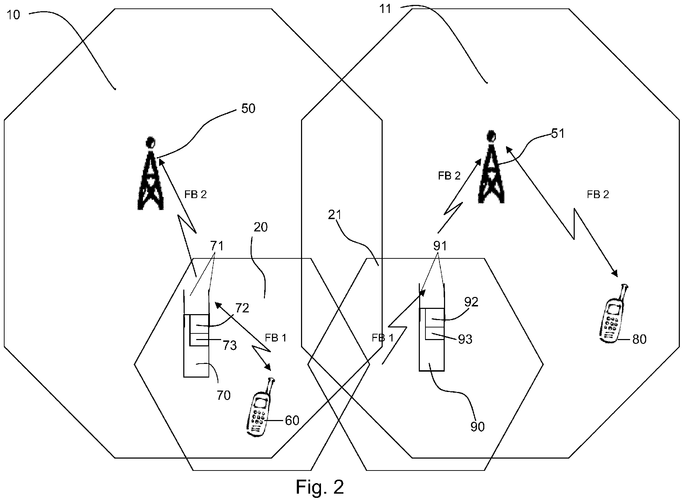

Im Folgenden wird das Verfahren zur Frequenzumsetzung von Funksignalen, für ein UMTS-Telekommunikationsnetz beschrieben, wie in Figur 2 dargestellt.

In diesem Ausführungsbeispiel wird das Telekommunikationsnetz im Frequenzband UMTS900 (FB 2) betrieben. Das Mobilfunkendgerät sendet und empfängt Signale im Kernfrequenzband UMTS 2100 (FB 1).

Der Frequenzumsetzer 70 empfängt über die Sende- und Empfangseinrichtung 71 Funksignale des Mobilfunkendgeräts 60 im Kernfrequenzband (FB 1).

Die Umsetzungseinheit 72 im Frequenzumsetzer 70 wandelt die empfangenen Funksignale im Kernfrequenzband UMTS2100 (FB 1) um in Funksignale des Frequenzbands UMTS900 des Telekommunikationsnetzes (FB 2), über das das Mobilfunkendgerät kommunizieren möchte. Über die Sende- und Empfangseinrichtung 71 des Frequenzumsetzers 70 werden die in das Frequenzband UMTS900 umgewandelten Funksignale an die Basisstation 50 gesendet. Diese Funksignale werden dann weiter von der Basisstation 50 an die Funknetz-Steuereinrichtung 30 über Richtfunkverbindungen oder Festnetzleitungen an die Funknetz-Vermittlungsstelle 40 gesendet. Von dieser Funknetz-Vermittlungsstelle 40 werden die Funksignale, je nach Ort des Endgeräts des anderen Teilnehmers z.B. in das Festnetz zu dem gewählten Festnetzanschluß vermittelt oder wenn sich der andere Teilnehmer mit seinem Endgerät in dem Telekommunikationsnetz aufhält, leitet die Funknetz-Vermittlungsstelle 40 die Funksignale über die oder eine andere Funknetz-Steuereinrichtung an eine Basisstation und von hier an das Endgerät 80 des anderen Teilnehmers.

Die Basisstation 50 verarbeitet die empfangenen Signale (FB 2) des Frequenzumsetzers 70 nach dem bekannten CDMA-Verfahren und sendet Funksignale im UMTS900 Frequenzband (FB 1) über die Funknetz-Steuereinrichtung 30 z. B. an das andere Mobilfunkgerät 80.

Der Frequenzumsetzer 70 empfängt die von der Basisstation 50 übertragenen Funksignale (FB 2) über die Sende-und Empfangseinrichtung 71 und wandelt diese in der Umsetzungseinheit 72 in Funksignale des Kernfrequenzbands UMTS2100 (FB 1) um.

Über die Sende- und Empfangseinrichtung 71 des Frequenzumsetzers 70 werden diese umgewandelten Funksignale (FB 1) an das Mobilfunkendgerät 60 gesendet. Während des Sendens und Empfangens von Funksignalen zwischen dem Mobilfunkendgerät 60 und der Basisstation 50 in einem Telekommunikationsnetz überträgt der Frequenzumsetzer 70 alle Parameter des UMTS-Telekommunikationsnetzes an das Mobilfunkendgerät 60.

In dem Fall, dass das Mobilfunkgerät 60 den Bereich der Subzelle 20 verlässt und keine andere Subzelle mit einem Frequenzumsetzer außerhalb der Subzelle 20 existiert, wird die Kommunikation zwischen dem Mobilfunkendgerät 60, dem Frequenzumsetzer 70 und damit auch der Basisstation 50 beendet, da das Mobilfunkendgerät 60, das im Kernfrequenzband UMTS 2100 (FB 1) sendet und empfängt, nicht direkt über die Basisstation 50, die im UMTS900 Frequenzband sendet und empfängt, im Telekommunikationsnetz kommunizieren kann.

In dem Fall, dargestellt in Figur 2 , das das Mobilfunkendgerät 60 vom Bereich der Subzelle 20 in den Bereich der Subzelle 21 wechselt und damit ebenfalls ein Wechsel von der Funkzelle 10 in eine Funkzelle 11 stattfindet, erfolgt dieser Wechsel durch Soft Handover oder Hard Handover oder HSDPA Cell Change. HSDPA steht für High Speed Data Packet Access.

Als Handover bezeichnet man einen Vorgang in einem Telekommunikationsnetz, bei dem das mobile Endgerät 60 während eines Gesprächs oder einer Datenverbindung von einer Funkzelle in eine andere wechselt. Beim Handover übernimmt eine andere Zelle die Kontrolle über die Verbindung. Es gibt auch Intra-Zell Handover, den Frequenzwechsel für den Fall, dass die bisher genutzte Frequenz nicht mehr zur Verfügung steht. Handover werden netzseitig eingeleitet und werden unterteilt in Hard Handover und Soft Handover.

Beim Hard Handover wird innerhalb einer sehr kurzen Zeitspanne die Verbindung an eine andere Zelle übergeben. Diese Art von Handover kommt bei GSM-Telekommunikationsnetzen zum Einsatz, da GSM-Telekommunikationsnetze technisch nur diesen Handover-Typ unterstützen. Sogenannte Soft Handover werden in UMTS-Telekommunikationsnetzen genutzt. Beim Soft Handover kann das mobile Endgerät 60 auch mit maximal 3 Basisstationen oder in unserem Beispiel mit zwei Frequenzumsetzern 70,90 verbunden sein. Man spricht hier von der sogenannten Macro Diversity. Die Verbindungsübergabe beim Wechsel von Subzelle 20 zu Subzelle 21 erfolgt nicht plötzlich sondern "weich" (soft). Die Koordination dieser Verbindungsübergabe, dem Kombinieren der Empfangssignale, erfolgt durch das nächsthöhere Netzelement in der Funknetzhierarchie, in unserem Beispiel in Figur 2 durch die Funknetz-Steuereinrichtung 30, da der Soft Handover zwischen den Subzellen zweier verschiedener Basisstationen 50,51 erfolgt.

Bei der Verbindungsübergabe zwischen zwei Subzellen in einer Funkzelle würde direkt die Basisstation 50, in unserem Beispiel die Node B in einem UMTS-Telekommunikationsnetz, das Combining steuern. In diesem Fall spricht der Fachmann vom "Softer Handover".

Je nachdem welche technischen Elemente in dem Telekommunikationsnetz beteiligt sind, lassen sich Handover durch den Fachmann noch in z.B. Intra-BTS-Handover, Inter-BSC-Handover, Intra-RNC-Handover oder Inter-MSC Handover unterscheiden.

Wenn sich das Mobilfunkendgerät 60 als UMTS2100 Mobilfunkgerät in Verbindung stehend mit dem Frequenzumsetzer 70 von der Subzelle 20 in die Subzelle 21 bewegt, verarbeitet sowohl das Mobilfunkendgerät 60 als auch der Frequenzumsetzer 70 die empfangenen Funksignale des anderen Endgerätes 80 oder des benachbarten Frequenzumsetzers 90 als Funksignale, die durch die sog. Mehrwegeausbreitung in den Funkzellen 10,11 bzw. der Subzelle 21 entstehen können. Die Erfassungseinheit 73 im Frequenzumsetzer 70, in diesem Beispiel der sogenannte Rake-Empfänger, hat die Aufgabe, die unterschiedlichen empfangenen Funksignale zu kombinieren, zu verarbeiten und den Handover zu unterstützen. Typgleiche Rake-Empfänger befinden sich auch in den Mobilfunkgeräten 60,80 um in diesen Geräten die gleichen Vorgänge wie oben beschrieben für das Endgerät durchzuführen.

### Bezugszeichenliste

- 10, 11: Funkzelle
- 20, 21: Subzelle
- 30: Funknetz-Steuereinrichtung (RNC)
- 40: Mobile Switching Center (MSC), Funknetz-Vermittlungsstelle
- 50, 51: Basisstation
- 60, 80: Mobilfunkendgerät
- 70, 90: Frequenzumsetzer
- 71, 91: Sende- und Empfangseinrichtung des Frequenzumsetzers
- 72, 92: Umsetzungseinheit des Frequenzumsetzers
- 73, 93: Erfassungseinheit des Frequenzumsetzers

## Patentansprüche

1. Vorrichtung zur Frequenzumsetzung (70, 90) von Funksignalen zwischen einem Mobilfunk-Endgerät (60) und einer Basisstation (50, 51) in einem Telekommunikationsnetz nach LTE-Standard, wobei die Vorrichtung (70, 90) mindestens eine Sende- und eine Empfangseinrichtung (71, 91) zum Senden und Empfangen von Funksignalen in verschiedenen Frequenzbändern sowie mindestens eine Umsetzungseinheit (72, 92) zur Umsetzung der Funksignale von einem ersten Frequenzband in ein zweites Frequenzband aufweist, wobei
die Umsetzungseinheit (72, 92) die von dem Mobilfunk-Endgerät (60) empfangenen Funksignale im ersten Frequenzband in Funksignale des zweiten Frequenzbandes umwandelt und über die Sende- und die Empfangseinrichtung (71, 91) die in das zweite Frequenzband umgewandelten Funksignale an die Basisstation (50, 51) sendet,
die Umsetzungseinheit (72, 92) die von der Basisstation (50, 51) empfangenen Funksignale im zweiten Frequenzband in Funksignale des ersten Frequenzbandes umwandelt und über die Sende- und die Empfangseinrichtung (71, 91) die in das erste Frequenzband umgewandelten Funksignale an das Mobilfunk-Endgerät (60) sendet,
wobei die Umsetzungseinheit (72, 92)
Mittel zur Ermittlung der Bandbreite des empfangenen Funksignals in dem ersten Frequenzband aufweist, so dass bei der Frequenzumsetzung der empfangenen Funksignale in das zweite Frequenzband die ermittelte Bandbreite des empfangenen Funksignals in dem ersten Frequenzband berücksichtigt wird, und
Mittel zur Ermittlung der Bandbreite des empfangenen Funksignals in dem zweiten Frequenzband aufweist, so dass bei der Frequenzumsetzung der empfangenen Funksignale in das erste Frequenzband die ermittelte Bandbreite des empfangenen Funksignals in dem zweiten Frequenzband berücksichtigt wird.

2. Vorrichtung nach Anspruch 1, **dadurch gekennzeichnet, dass** in dem Telekommunikationsnetz nach LTE-Standard die Sende- und die Empfangseinrichtung (71, 91) Mittel zum Empfangen und Senden der Funksignale zur Berücksichtigung einer Bandbreite in dem ersten oder zweiten Frequenzband aufweist.

3. Verfahren zur Frequenzumsetzung von Funksignalen zwischen einem Mobilfunkendgerät (60), einem Frequenzumsetzer (70, 90) und einer Basisstation (50, 51) in einem Telekommunikationsnetz nach LTE-Standard, wobei das Mobilfunk-Endgerät (60) in einem ersten Frequenzband sendet und empfängt und das Telekommunikationsnetz in einem zweiten Frequenzband betrieben wird, mit folgenden Verfahrensschritten:
Empfangen von Funksignalen des Mobilfunkendgerätes (60) in einem ersten Frequenzband in dem Frequenzumsetzer (70, 90),
Ermitteln der Bandbreite des empfangenen Funksignals in dem ersten und Frequenzband zum Berücksichtigen der ermittelten Bandbreite beim Umsetzen des Funksignals, so dass bei der Frequenzumsetzung der empfangenen Funksignale in das zweite Frequenzband die ermittelte Bandbreite berücksichtigt wird,
Umsetzen der Funksignale des ersten Frequenzbands in Funksignale eines zweiten Frequenzbands in dem Frequenzumsetzer (70, 90) und
Senden der in das zweite Frequenzband umgesetzten Funksignale von dem Frequenzumsetzer (70, 90) an die Basisstation (50, 51) und
Empfangen der Funksignale der Basisstation (50, 51) in dem zweiten Frequenzband in dem Frequenzumsetzer (70, 90),
Ermitteln der Bandbreite des empfangenen Funksignals in dem zweiten Frequenzband zum Berücksichtigen der ermittelten Bandbreite beim Umsetzen des Funksignals, so dass bei der Frequenzumsetzung der empfangenen Funksignale in das erste Frequenzband die ermittelte Bandbreite berücksichtigt wird,
Umsetzen der Funksignale des zweiten Frequenzbands in Funksignale des ersten Frequenzbands in dem Frequenzumsetzer (70, 90), und
Senden der in das erste Frequenzband umgesetzten Funksignale von dem Frequenzumsetzer (70, 90) an das Mobilfunkendgerät (60).

4. Verfahren nach Anspruch 3, **gekennzeichnet durch** Senden und Empfangen der Funksignale des Mobilfunkendgeräts (60) bei Beginn, Ende und während des Kommunizierens über die Vorrichtung nach Anspruch 1 oder Anspruch 2 in dem Telekommunikationsnetz.

## Claims

1. A device for the frequency convertion (70, 90) of radio signals between a mobile terminal (60) and a base station (50, 51) in a telecommunication network according to the LTE standard, wherein the device (70, 90) comprises at least one transmission and reception device (71, 91) for sending and receiving radio signals in different frequency bands as well as at least one convertion unit (72, 92) for converting radio signals from a first frequency band into a second frequency band, wherein
the convertion unit (72, 92) will converte the radio signals in the first frequency band received from the mobile terminal (60) into radio signals of the second frequency band and will send the radio signals converted into the second frequency band via the transmission and reception device (71, 91) to the base station (50, 51),
the convertion unit (72, 92) will converte the radio signals in the second frequency band received from the base station (50, 51) into radio signals of the first frequency band and will send the radio signals converted into the first frequency band via the transmission and reception device (71, 91) to the mobile terminal (60),
wherein the convertion unit (72, 92)
comprises means for determining the bandwidth of the received radio signal in the first frequency band, such that during the frequency convertion of the received radio signals into the second frequency band the determined bandwidth of the received radio signal in the first frequency band will be considered, and
means for determining the bandwidth of the received radio signal in the second frequency band, such that during the frequency convertion of the received radio signals into the first frequency band the determined bandwidth of the received radio signal in the second frequency band will be considered.

2. A device according to claim 1, **characterized in that** the transmission and reception device (71, 91) in the telecommunication network according to the LTE standard comprises means for receiving and sending the radio signals for considering a bandwidth in the first or second frequency band.

3. A method for the frequency convertion of radio signals between a mobile terminal (60), a frequency converter (70, 90) and a base station (50, 51) in a telecommunication network according to the LTE standard, wherein the mobile terminal (60) sends and receives in a first frequency band and the telecommunication network is operated in a second frequency band, comprising the following process steps:
receiving radio signals of the mobile terminal (60) in a fist frequency band in the frequency converter (70, 90),
determining the bandwidth of the received radio signal in the first frequency band for considering the determined bandwidth during the convertion of the radio signal, such that during the frequency convertion of the received radio signals into the second frequency band the determined bandwidth will be considered,
converting the radio signals of the first frequency band into radio signals of a second frequency band in the frequency converter (70, 90) and
sending the radio signals converted into the second frequency band from the frequency converter (70, 90) to the base station (50, 51) and
receiving the radio signals of the base station (50, 51) in the second frequency band in the frequency converter (70, 90),
determining the bandwidth of the received radio signal in the second frequency band for considering the determined bandwidth during the convertion of the radio signal, such that during the frequency convertion of the received radio signals into the first frequency band the determined bandwidth will be considered,
converting the radio signals of the second frequency band into radio signals of the first frequency band in the frequency converter (70, 90) and
sending the radio signals converted into the first frequency band from the frequency converter (70, 90) to the mobile terminal (60).

4. A method according to claim 3, **characterized by** sending and receiving the radio signals of the mobile terminal (60) at the beginning, at the end and during the communication via the device according to claim 1 or claim 2 in the telecommunication network.

## Revendications

1. Dispositif de conversion de fréquence (70, 90) de signaux radio entre un terminal radio mobile (60) et une station de base (50, 51) dans un réseau de télécommunication selon le standard LTE, le dispositif (70, 90) comprenant au moins un dispositif d'émission et de réception (71, 91) pour émettre et recevoir des signaux radio dans des bandes de fréquence différentes ainsi qu'au moins une unité de conversion (72, 92) pour convertir les signaux radio d'une première bande de fréquence dans une deuxième bande de fréquence, dans lequel
l'unité de conversion (72, 92) convertit les signaux radio dans la première bande de fréquence reçus du terminal radio mobile (60) dans des signaux radio dans la deuxième bande de fréquence et envoie les signaux radio convertis dans la deuxième bande de fréquence via le dispositif d'émission et de réception (71, 91) à la station de base (50, 51),
l'unité de conversion (72, 92) convertit les signaux radio dans la deuxième bande de fréquence reçus de la station de base (50, 51) dans des signaux radio dans la première bande de fréquence et envoie les signaux radio convertis dans la première bande de fréquence via le dispositif d'émission et de réception (71, 91) au terminal radio mobile (60),
l'unité de conversion (72, 92)
comprenant des moyens de détermination de la largeur de bande du signal radio reçu dans la première bande de fréquence, de sorte que pendant la conversion de fréquence des signaux radio reçus dans la deuxième bande de fréquence, la largeur de bande déterminée du signal radio reçu dans la première bande de fréquence est considérée, et
des moyens de détermination de la largeur de bande du signal radio reçu dans la deuxième bande de fréquence, de sorte que pendant la conversion de fréquence des signaux radio reçus dans la première bande de fréquence, la largeur de bande déterminée du signal radio reçu dans la deuxième bande de fréquence est considérée.

2. Dispositif selon la revendication 1, **caractérisé en ce que** le dispositif d'émission et de réception (71, 91) dans le réseau de télécommunication selon le standard LTE comprend des moyens de réception et d'émission des signaux radio pour considérer une largeur de bande dans la première ou deuxième bande de fréquence.

3. Procédé de conversion de fréquence de signaux radio entre un terminal radio mobile (60), un convertisseur de fréquences (70, 90) et une station de base (50, 51) dans un réseau de télécommunication selon le standard LTE, le terminal radio mobile (60) envoyant et recevant dans une première bande de fréquence et le réseau de télécommunication fonctionnant dans une deuxième bande de fréquence, comprenant les étapes de procédé suivantes de:
recevoir des signaux radio du terminal radio mobile (60) dans une première bande de fréquence dans le convertisseur de fréquences (70, 90),
déterminer la largeur de bande du signal radio reçu dans la première bande de fréquence pour considérer la largeur de bande déterminée au cours de la conversion du signal radio, de sorte que pendant la conversion de fréquence des signaux radio reçus dans la deuxième bande de fréquence la largeur de bande déterminée est considérée,
convertir les signaux radio de la première bande de fréquence dans des signaux radio d'une deuxième bande de fréquence dans le convertisseur de fréquences (70, 90) et
envoyer les signaux radio convertis dans la deuxième bande de fréquence à partir du convertisseur de fréquences (70, 90) à la station de base (50, 51) et recevoir les signaux radio de la station de base (50, 51) dans la deuxième bande de fréquence dans le convertisseur de fréquences (70, 90),
déterminer la largeur de bande du signal radio reçu dans la deuxième bande de fréquence pour considérer la largeur de bande déterminée au cours de la conversion du signal radio, de sorte que pendant la conversion de fréquence des signaux radio reçus dans la première bande de fréquence la largeur de bande déterminée est considérée,
convertir les signaux radio de la deuxième bande de fréquence dans des signaux radio de la première bande de fréquence dans le convertisseur de fréquences (70, 90) et
envoyer les signaux radio convertis dans la première bande de fréquence à partir du convertisseur de fréquences (70, 90) au terminal radio mobile (60).

4. Procédé selon la revendication 3, **caractérisé par** l'étape d'envoyer et de recevoir les signaux radio du terminal radio mobile (60) au début, à la fin et pendant la communication via le dispositif selon la revendication 1 ou la revendication 2 dans le réseau de télécommunication.
